# EUROPEAN PATENT SPECIFICATION

(11) **EP 3 119 131 B1**
(45) Date of publication and mention of the grant of the patent: **15.01.2020**
(21) Application number: 14885643.8
(22) Date of filing: 31.12.2014
(51) Int. Cl.: H04W 48/20, H04W 48/16, H04W 36/32, H04W 36/30, H04W 48/04, H04W 48/10, H04W 48/08, H04W 88/02, H04W 88/08

(54) **CELL ACCESS METHODS**
VERFAHREN FÜR DEN ZUGRIFF AUF ZELLEN
PROCÉDÉS D'ACCÈS À DES CELLULES

(30) Priority: 13.03.2014 CN 201410093056
(43) Date of publication of application: 18.01.2017
(73) Proprietor: China Mobile Communications Corporation, Beijing 100032 (CN)
(72) Inventor: HU, Nan, Beijing 100032 (CN); JIANG, Xiaowei, Beijing 100032 (CN); XIE, Fang, Beijing 100032 (CN)
(74) Representative: Habermann, Hruschka & Schnabel
(86) International application number: PCT/CN2014/095974
(87) International publication number: WO 2015/135371

(56) References cited:
- EP-A1- 1 163 816
- WO-A1-2014/180714
- CN-A- 101 635 971
- CN-A- 102 291 710
- US-A1- 2010 190 494
- US-A1- 2011 199 905
- NOKIA SIEMENS NETWORKS ET AL: "Discussion on RACH access Failure", 3GPP DRAFT; R2-131947 RACH FAILURE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Fukuoka, Japan; 20130520 - 20130524 11 May 2013 (2013-05-11), XP050700093, Retrieved from the Internet: URL:http://www.3gpp.org/ftp/tsg_ran/WG2_RL 2/TSGR2_82/Docs/ [retrieved on 2013-05-11]
- NEC CORPORATION: "Consideration on Chiba issue", 3GPP DRAFT; R2-133422_R2-132661_CHIBA ISSUE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Ljubljana, Slovenia; 20131007 - 20131011 27 September 2013 (2013-09-27), XP050719039, Retrieved from the Internet: URL:http://www.3gpp.org/ftp/tsg_ran/WG2_RL 2/TSGR2_83bis/Docs/ [retrieved on 2013-09-27]
- BROADCOM CORPORATION ET AL: "Deployment of Chiba issue's solu", 3GPP DRAFT; R2-140342_CHIBA SOLUTION DEPLOYMENT, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Prague, Czech Republic; 20140210 - 20140214 9 February 2014 (2014-02-09), XP050791730, Retrieved from the Internet: URL:http://www.3gpp.org/ftp/Meetings_3GPP_ SYNC/RAN2/Docs/ [retrieved on 2014-02-09]

## Description

### TECHNICAL FIELD

The present disclosure relates to the field of the radio communication technology, and in particular to method for accessing a cell and a device for accessing a cell of which coverage of uplink and downlink signals are different.

### BACKGROUND

Along with a development of the communication technology, in order to achieve a comprehensive coverage of a communication system, more and more base devices are arranged. Some of the base devices are arranged indoors, and some of the base devices are arranged at hotspot regions, some of the base devices are arranged at high mountains, and some of the base devices are arranged by water.

Signals received and sent by the base devices arranged by water are influenced by atmosphere and a reflection of a water surface, so a relative strong reflection path is formed. When the reflection path is superposed with a direct path of the base device, a strong signal (hereinafter referred to as a superposed signal) may be formed, such that a terminal device far away from the base device may receive the superposed signal. However, due to a transmission power of the terminal device, an uplink feedback signal of the terminal device in response to the received superposed signal cannot reach the base device, such that an uplink signal and a downlink signal of the base device are inconsistent, and that is the so-called "lakeside effect".

The adverse influence of the lakeside effect lies in that when the terminal device far away from the terminal device is subjected to the lakeside effect and accesses the base device, the uplink feedback signal of the terminal device cannot reach the terminal device, such that the access of the terminal device to the base device may be failed.

At present, in order to make the uplink and the downlink signals of the base device consistent with each other, offsets of the cells with cell levels are reslected. That is, for the base device A subjected to the lakeside effect and the base device B which is not subjected to the lakeside effect and adjacent to the base device A, the cell reselection offset of the base device A is configured, as so to make the terminal device subjected to the lakeside effect to select the base device B. As such, the terminal device within the coverage area of the base device A may select to access the base device B. The terminal device accessing the base device B may be interfered by the base device A during the communication, and then the communication quality may be deteriorated.

To sum up, a method for accessing a cell is desired to solve the failure accessing to the base device of the terminal device subjected to the lakeside effect or solve the deterioration of the communication quality after the terminal device accessed the base device.

For example, EP 1 163 816 A1 discusses a subscriber unit for use in a cellular communication system having a plurality of base stations supporting at least said subscriber unit and transmitting a pilot signal and uplink characteristics information, the subscriber unit comprising: receiving means for receiving the uplink characteristics information from a target set of base stations selected from set plurality of base stations; calculation means, when in idle mode, to calculate the required random access message transmit power for a random access message in response to said uplink characteristics information; base station selection means for determining at least one serving base station in response to said uplink characteristics information; and transmitting means for accessing the cellular communication system through said at least one serving base station. Further, US 2010/190494 A1" discusses a method and apparatus for selecting a cell, which is capable of reducing temporary no service phenomenon by selecting a serving cell to be camped on, excluding a cell where frequency interference or a bad frame is generated, that is, a cell whose communication channel state is not good, and reducing battery current consumption due to frequent performance of cell selection procedure. 3GPP Publication R2-131947 "Nokia Siemens Networks, Nokia Corporation: Discussion on RACH access Failure" presents a solution for the issue of UE repeatedly failing to transmit RRC CONNECTION REQUEST to a NodeB. From US 2011/199905 A1 a method for performing load balancing by a wireless transmit/receive unit is known, which includes evaluating a current cell load value and on a condition that the current cell load value is greater than a predetermined threshold, performing load balancing by barring the current cell. 3GPP Reference document R2-133422 "NEC Corporation: Consideration on Chiba issue Document for: Discussion and Decision" discusses a solution to solve the Chiba problem. Further, WO 2014/180714 A1 discusses a method for an improved cell selection/reselection handling by a user equipment that is trying to camp on a radio cell. Last, 3GPP document R2-140342, "Broadcom Corporation, Deutsche Telekom: Deployment of Chiba issue's solution" proposes a solution to the Chiba problem.

### SUMMARY

The invention is defined in the appended claims.

In view of this, the present disclosure provide a method for accessing a cell and a device for accessing a cell, so as to solve the failure accessing to the base device of the terminal device subjected to the lakeside effect or solve the deterioration of the communication quality after the terminal device accessed the base device.

A method for accessing a cell, including:
receiving, by a terminal device, system information sent by a serving cell where the terminal device resides, wherein the system information includes a cell resident risk identifier and measurement information;
determining, based on the cell resident risk identifier, that the serving cell has a risk to be subjected to a lakeside effect, and detecting signal quality of the serving cell based on the measurement information; and
determining whether the terminal device is subjected to the lakeside effect based on the detected signal quality, and accessing the serving cell when it is determined that the terminal device is not subjected to the lakeside effect.

The method further includes:
initiating, by the terminal device, a serving cell reselection operation when it is determined that the terminal device is subjected to the lakeside effect, and setting the serving cell where the terminal device resides as a serving cell which the terminal device is forbidden to access.

The system information further includes a predetermined signal quality threshold of the serving cell.

The step of determining whether the terminal device is subjected to the lakeside effect based on the detected signal quality information includes:
comparing, by the terminal device, the detected signal quality with the received predetermined signal quality threshold of the serving cell; and
determining whether the terminal device is subjected to the lakeside effect based on a result of the comparison.

The step of determining whether the terminal device is subjected to the lakeside effect based on a result of the comparison includes:
determining, by the terminal device, the terminal device is not subjected to the lakeside effect, when the terminal device determines that the detected signal quality is not greater than the received predetermined signal quality threshold of the serving cell; or
determining, by the terminal device, the terminal device is subjected to the lakeside effect, when the terminal device determines that the detected signal quality is greater than the received predetermined signal quality threshold of the serving cell.

A process of acquiring the cell resident risk identifier includes: sending, by the terminal device, cell accessing failure event information to a network side, wherein the cell accessing failure event information includes an identifier of a cell accessed by the terminal device and a position of the terminal device; determining, by the network side, a position of the cell accessed by the terminal device, based on the received identifier of the cell accessed by the terminal device; determining that the cell accessed by the terminal device is subjected to the lakeside effect when it is determined that a distance between the position of the cell accessed by the terminal device and the position of the terminal device is greater than a first predetermined threshold; and sending the cell resident risk identifier to the cell subjected to the lakeside effect.

A process of acquiring the cell resident risk identifier includes: sending, by the terminal device, cell accessing failure event information to a network side, wherein the cell accessing failure event information includes an identifier of a cell accessed by the terminal device and a position of the terminal device; determining, by the network side, based on the position of the terminal device, an identifier of at least one cell of which the signal quality is greater than a second predetermined threshold at the position of the terminal device; determining that the cell accessed by the terminal device is subjected to the lakeside effect when it is determined that the at least one cell is not adjacent to the cell corresponding to the identifier of the cell accessed by the terminal device; sending the cell resident risk identifier to the cell subjected to the lakeside effect.

A method for accessing a cell, including: broadcasting, by a serving cell, system information including a cell resident risk identifier and measurement information; and eceiving, when a terminal device residing at the serving cell determines that the terminal device is not subjected to a lakeside effect, access information of the terminal device, and permitting the terminal device to access the serving cell.

Prior to the step of broadcasting system information by a serving cell, the method further includes: receiving a cell resident risk identifier sent from a network side.

The method further includes: receiving a cell resident risk identifier sent by an adjacent serving cell, and adding the cell resident risk identifier sent by the adjacent serving cell and an identifier of the adjacent serving cell into the system information.

A terminal device for accessing a cell, including:
a receiving module, configured to receive system information sent by a serving cell where a terminal device resides, wherein the system information includes a cell resident risk identifier and measurement information;
a determination and detection module, configured to determine, based on the cell resident risk identifier, that the serving cell has a risk to be subjected to a lakeside effect, and detect signal quality of the serving cell based on the measurement information;
an access module, configured to determine whether the terminal device is subjected to the lakeside effect based on the detected signal quality, and access the serving cell when it is determined that the terminal device is not subjected to the lakeside effect.

The access module is further configured to initiate a serving cell reselection operation when it is determined that the terminal device is subjected to the lakeside effect, and set the serving cell where the terminal device resides as a serving cell which the terminal device is forbidden to access.

The system information further includes a predetermined signal quality threshold of the serving cell.

The access module is further configured to compare the detected signal quality with the received predetermined signal quality threshold of the serving cell, and determine whether the terminal device is subjected to the lakeside effect based on a result of the comparison.

The access module is further configured to determine that the terminal device is not subjected to the lakeside effect when the terminal device determines that the detected signal quality is not greater than the received predetermined signal quality threshold of the serving cell, or determine that the terminal device is subjected to the lakeside effect when the terminal device determines that the detected signal quality is greater than the received predetermined signal quality threshold of the serving cell.

A process of acquiring the cell resident risk identifier includes: sending cell accessing failure event information to a network side, wherein the cell accessing failure event information includes an identifier of a cell accessed by the terminal device and position of the terminal device;
determining, by the network side, a position of the cell accessed by the terminal device, based on the received identifier of the cell accessed by the terminal device;
determining that the cell accessed by the terminal device is subjected to the lakeside effect when it is determined that a distance between the position of the cell accessed by the terminal device and the position of the terminal device is greater than a first predetermined threshold; and
sending the cell resident risk identifier to the cell subjected to the lakeside effect.

A process of acquiring the cell resident risk identifier includes:
sending cell accessing failure event information to a network side, wherein the cell accessing failure event information includes an identifier of a cell accessed by the terminal device and position of the terminal device;
determining, by the network side, based on the position of the terminal device, an identifier of at least one cell of which the signal quality is greater than a second predetermined threshold at the position of the terminal device;
determining that the cell accessed by the terminal device is subjected to the lakeside effect when it is determined that the at least one cell is not adjacent to the cell corresponding to the identifier of the cell accessed by the terminal device;
sending the cell resident risk identifier to the cell subjected to the lakeside effect.

A serving cell to be accessed, including:
a broadcasting module, configured to broadcast system information including a cell resident risk identifier and measurement information; and
an access response module, configured to receive, when a terminal device residing at the serving cell determines that the terminal device is not subjected to a lakeside effect, access information of the terminal device, and permit the terminal device to access the serving cell.

The serving cell further includes: a receiving module, configured to receive a cell resident risk identifier sent from a network side prior to broadcasting system information.

The serving cell further includes: a risk identifier transmission module, configured to receive a cell resident risk identifier sent by an adjacent serving cell, and add the cell resident risk identifier sent by the adjacent serving cell and identifier information of the adjacent serving cell into the system information.

According to the embodiments of the present disclosure, the method for accessing a cell includes: receiving, by a terminal device, system information sent by a serving cell where the terminal device resides, wherein the system information comprises a cell resident risk identifier and measurement information; determining, based on the cell resident risk identifier, that the serving cell has a risk to be subjected to a lakeside effect, and detecting signal quality of the serving cell based on the measurement information; and determining whether the terminal device is subjected to the lakeside effect based on the detected signal quality, and accessing the serving cell when it is determined that the terminal device is not subjected to the lakeside effect. According to the method for accessing a cell, the terminal device determines, before accessing the serving cell, whether the terminal device is subjected to the effect. According to the method for accessing a cell, the terminal device determines, before accessing the serving cell, whether the terminal device is subjected to the lakeside effect, such that the terminal device within the coverage area of the serving cell accesses the base device successfully while the terminal device outside the coverage area of the serving cell which resides at the serving cell may be detected and prevented in time to access the serving cell, thereby to avoid the failure accessing to the base device of the terminal device caused by the lakeside effect and improving the communication quality of the terminal device.

### BRIEF DESCRIPTION OF THE DRAWINGS

Fig.1 is a flow chart of a method for accessing a cell in embodiment I of the present disclosure;
Fig.2 is a flow chart of a method for accessing a cell in exemplary embodiment II of the present disclosure;
Fig.3 is a schematic view of a terminal device for accessing the a cell in embodiment III of the present disclosure;
Fig.4 is a schematic view of a serving cell to be accessed in embodiment IV of the present disclosure;
Fig.5 is a schematic view of a cell accessing system in exemplary embodiment V of the present disclosure.

### DETAILED DESCRIPTION

To achieve the object of the present disclosure, a method for accessing a cell and a device for accessing a cell are provided. The method for accessing a cell includes: receiving, by a terminal device, system information sent by a serving cell where the terminal device resides, wherein the system information comprises a cell resident risk identifier and measurement information; determining, based on the cell resident risk identifier, the serving cell is a serving cell prone to be subjected to a lakeside effect, and detecting signal quality of the serving cell based on the measurement information; and determining whether the terminal device is subjected to the lakeside effect based on the detected signal quality, and accessing the serving cell when it is determined that the terminal device is not subjected to the lakeside effect. According to the method for accessing a cell, the terminal device determines, before accessing the serving cell, whether the terminal device is subjected to the lakeside effect, such that the terminal device within the coverage area of the serving cell accesses the base device successfully while the terminal device outside the coverage area of the serving cell which resides at the serving cell may be detected and prevented in time to access the serving cell, thereby to avoid the failure accessing to the base device of the terminal device caused by the lakeside effect and improving the communication quality of the terminal device.

The embodiments of the present disclosure will be described hereinafter in conjunction with drawings.

### Embodiment I

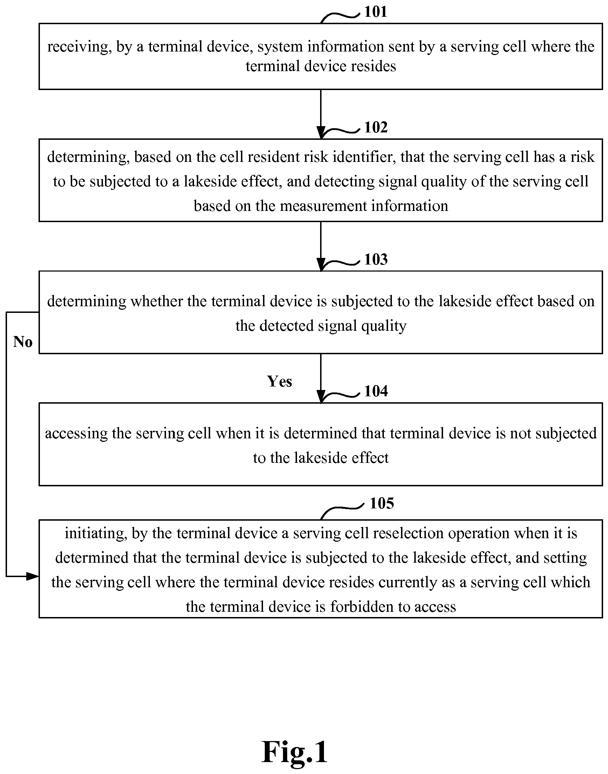

Fig.1 is a flow chart of a method for accessing a cell in embodiment I of the present disclosure. The method includes:
Step 101: receiving, by a terminal device, system information sent by a serving cell where the terminal device resides, wherein the system information includes a cell resident risk identifier and measurement information.

In Step 101, when the terminal device receives reference information sent by the serving cell, the terminal device may select a serving cell corresponding to the reference information to reside.

When the terminal device selects a serving cell to reside, the reference information received by the terminal device includes the reference information indicating that the reflection path is strengthened due to the lakeside effect.

The reference information indicating that the reflection path is strengthened due to the lakeside effect is sent by a serving cell having a risk to be subjected to the lakeside effect.

When the serving cell where the terminal device resides belongs to a base device having a risk to be subjected to the lakeside effect, the terminal device receives the system information sent by the base device. The system information includes a cell resident risk identifier and measurement information.

A method for determining whether the serving cell has a risk to be subjected to the lakeside effect includes but not limited to the following:

### Method I

Firstly, a network side receives cell accessing failure event information sent by a terminal device.

The cell accessing failure event information includes an identifier of a cell accessed by the terminal device and a position of the terminal device.

To be specific, after the terminal device resides at the serving cell and a request of accessing the serving cell is failed, the terminal device sends the cell accessing failure event information to the network side, and notifies the network side, via the cell accessing failure event information, of the identifier of the serving cell which the terminal device is failed to access and the position of the terminal device.

Secondly, the network side determines a position of the cell accessed by the terminal device, based on the received identifier of the cell accessed by the terminal device.

It should be noted that, the position of the cell accessed by the terminal device and the position of the terminal device may include longitude and latitude information and altitude information or other information representing the position, which is not limited herein.

Thirdly, it is determined that the cell accessed by the terminal device is subjected to the lakeside effect when the network side determines that a distance between the position of the cell accessed by the terminal device and the position of the terminal device is greater than a first predetermined threshold.

To be specific, the network side calculates a distance between the position of the cell accessed by the terminal device and the position of the terminal device. When the distance is greater than the first predetermined threshold, it is indicated that the terminal device is outside a signal coverage area of the serving cell. The reason for the terminal device to be able to receive the reference information sent by the serving cell and reside at the serving cell may be that the terminal device has been subjected to the lakeside effect. Therefore, it is determined that the cell accessed by the terminal device is subjected to the lakeside effect.

At last, the network side sends the cell resident risk identifier to the cell subjected to the lakeside effect.

As such, the serving cell is labeled as a serving cell having a risk to be subjected to the lakeside effect.

It should be noted that, the value of the first threshold may be determined based on the signal coverage area of the serving cell, or based on an actual measurement, or based on the experimental data, which is not limited herein.

### Method II

Firstly, a network side receives cell accessing failure event information sent by a terminal device.

The cell accessing failure event information includes an identifier of a cell accessed by the terminal device and a position of the terminal device.

To be specific, after the terminal device resides at the serving cell and a request of accessing the serving cell is failed, the terminal device sends the cell accessing failure event information to the network side, and notifies the network side, via the cell accessing failure event information, of the identifier of the serving cell which the terminal device is failed to access and the position of the terminal device.

Secondly, the network side determines, based on the position of the terminal device, an identifier of at least one cell of which the signal coverage quality is greater than a second predetermined threshold at the position of the terminal device.

To be specific, the network side determines, based on the position of the terminal device, the identifier of the cell corresponding to the signal coverage at the position of the terminal device, and measures the quality of the signal of the cell corresponding to the identifier at the position of the terminal device, compares the measured signal quality with the second predetermined threshold, and determines the identifier of the cell of which the signal quality is greater than the second predetermined threshold.

Thirdly, when it is determined that the cell corresponding to identifier of the at least one cell is not adjacent to the cell corresponding to the identifier of the cell accessed by the terminal device, it is determined that the cell accessed by the terminal device is subjected to the lakeside effect.

To be specific, it is determined whether the cell of which the signal quality is greater than the second predetermined threshold is adjacent to the cell accessed by the terminal device. When it is determined that the cell corresponding to identifier of the at least one cell is not adjacent to the cell corresponding to the identifier of the cell accessed by the terminal device, it is determined that the cell accessed by the terminal device is subjected to the lakeside effect.

It should be noted that, the second threshold may be determined based on the signal coverage quality at a certain position, or based on experimental data, which is not limited herein.

At last, the network side sends the cell resident risk identifier to the cell subjected to the lakeside effect.

It should be noted that, the process of determining by the network side whether the serving cell has a risk to be subjected to the lakeside effect may include analyzing the received cell accessing failure event information of a plurality of terminal devices for an identical serving cell, which is not limited herein.

Optionally, the system information further comprises a predetermined signal quality threshold of the serving cell.

Step 102: determining, based on the cell resident risk identifier, that the serving cell has a risk to be subjected to a lakeside effect, and detecting signal quality of the serving cell based on the measurement information.

In Step 102, the reference signal transmitted by the serving cell having a risk to be subjected to the lakeside effect may be received by both the terminal device far away from the serving cell and a terminal device near the serving cell (i.e., a terminal device which is not subjected to the lakeside effect), such that the terminal device which is not subjected to the lakeside effect may also access the serving cell successfully. Therefore, before the terminal device access the serving cell, it is required to determine whether the accessing of the terminal device to the serving cell is influenced by the lakeside effect.

At this time, after the terminal device received the measurement information and the cell resident risk identifier sent by the serving cell, it may be determined, based on the cell resident risk identifier, whether the serving cell has a risk to be subjected to a lakeside effect, and then the signal quality of the serving cell may be detected in the subsequent step.

The measurement information at least includes cell frequency point information, a cell carrier bandwidth and so on.

Step 103: determining whether the terminal device is subjected to the lakeside effect based on the detected signal quality. The method goes to Step 104 if it is determined that the terminal device is subjected to the lakeside effect, otherwise the method goes to Step 105.

In Step 103, the terminal device compares the detected signal quality with the received predetermined signal quality threshold of the serving cell, and determines whether the terminal device is subjected to the lakeside effect based on a result of the comparison.

To be specific, the terminal device determines that the terminal device is not subjected to the lakeside effect when the terminal device determines that the detected signal quality is not greater than the received predetermined signal quality threshold of the serving cell.

The terminal device determines that the terminal device is subjected to the lakeside effect, when the terminal device determines that the detected signal quality is greater than the received predetermined signal quality threshold of the serving cell.

It should be noted that, the signal quality threshold may be determined based on the reflected signal of the serving cell or based on the experimental data, which is not limited herein.

Step 104: accessing the serving cell when it is determined that terminal device is not subjected to the lakeside effect.

Step 105: initiating, by the terminal device a serving cell reselection operation when it is determined that the terminal device is subjected to the lakeside effect, and setting the serving cell where the terminal device resides currently as a serving cell which the terminal device is forbidden to access.

As such, the terminal device determines, before accessing the serving cell, whether the terminal device is subjected to the lakeside effect, such that the terminal device within the coverage area of the serving cell accesses the base device successfully while the terminal device outside the coverage area of the serving cell which resides at the serving cell may be detected and prevented in time to access the serving cell, thereby to avoid the failure accessing to the base device of the terminal device caused by the lakeside effect.

According to embodiment I of the present disclosure, the method for accessing a cell includes: receiving, by a terminal device, system information sent by a serving cell where the terminal device resides, wherein the system information includes a cell resident risk identifier and measurement information; determining, based on the cell resident risk identifier, that the serving cell has a risk to be subjected to a lakeside effect, and detecting signal quality of the serving cell based on the measurement information; and determining whether the terminal device is subjected to the lakeside effect based on the detected signal quality, and accessing the serving cell when it is determined that terminal device is not subjected to the lakeside effect. According to the method for accessing a cell, the terminal device determines, before accessing the serving cell, whether the terminal device is subjected to the lakeside effect, such that the terminal device within the coverage area of the serving cell accesses the base device successfully while the terminal device outside the coverage area of the serving cell which resides at the serving cell may be detected and prevented in time to access the serving cell, thereby to avoid the failure accessing to the base device of the terminal device caused by the lakeside effect and improving the communication quality of the terminal device.

### Exemplary embodiment II

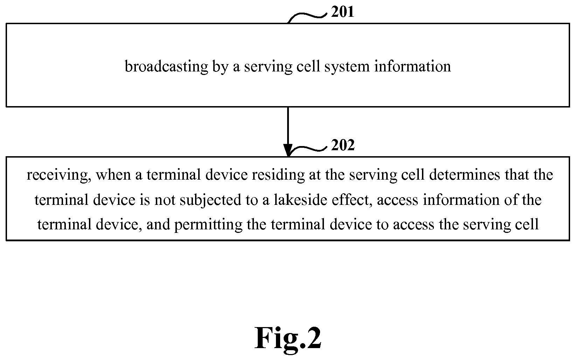

Fig.2 is a flow chart of a method for accessing a cell in embodiment II of the present disclosure, the method includes:
Step 201: broadcasting by a serving cell system information comprising a cell resident risk identifier and measurement information.

In Step 201, prior to the step of broadcasting system information by a serving cell, the method further includes: receiving a cell resident risk identifier sent from a network side.

A process of acquiring the cell resident risk identifier comprises: but not limited to the following:

### Method I

Firstly, a network side receives cell accessing failure event information sent by a terminal device.

The cell accessing failure event information includes an identifier of a cell accessed by the terminal device and a position of the terminal device.

To be specific, after the terminal device resides at the serving cell and a request of accessing the serving cell is failed, the terminal device sends the cell accessing failure event information to the network side, and notifies the network side, via the cell accessing failure event information, of the identifier of the serving cell which the terminal device is failed to access and the position of the terminal device.

Secondly, the network side determines a position of the cell accessed by the terminal device, based on the received identifier of the cell accessed by the terminal device.

It should be noted that, the position of the cell accessed by the terminal device and the position of the terminal device may include longitude and latitude information and altitude information or other information representing the position, which is not limited herein.

Thirdly, it is determined that the cell accessed by the terminal device is subjected to the lakeside effect when the network side determines that a distance between the position of the cell accessed by the terminal device and the position of the terminal device is greater than a first predetermined threshold.

To be specific, the network side calculates a distance between the position of the cell accessed by the terminal device and the position of the terminal device. When the distance is greater than the first predetermined threshold, it is indicated that the terminal device is outside a signal coverage area of the serving cell. The reason for the terminal device to be able to receive the reference information sent by the serving cell and reside at the serving cell may be that the terminal device has been subjected to the lakeside effect. Therefore, it is determined that the cell accessed by the terminal device is subjected to the lakeside effect.

At last, the network side sends the cell resident risk identifier to the cell subjected to the lakeside effect.

As such, the serving cell is labeled as a serving cell having a risk to be subjected to the lakeside effect.

It should be noted that, the value of the first threshold may be determined based on the signal coverage area of the serving cell, or based on an actual measurement, or based on the experimental data, which is not limited herein.

### Method II

Firstly, a network side receives cell accessing failure event information sent by a terminal device.

The cell accessing failure event information includes an identifier of a cell accessed by the terminal device and a position of the terminal device.

To be specific, after the terminal device resides at the serving cell and a request of accessing the serving cell is failed, the terminal device sends the cell accessing failure event information to the network side, and notifies the network side, via the cell accessing failure event information, of the identifier of the serving cell which the terminal device is failed to access and the position of the terminal device.

Secondly, the network side determines, based on the position of the terminal device, an identifier of at least one cell of which the signal coverage quality is greater than a second predetermined threshold at the position of the terminal device.

To be specific, the network side determines, based on the position of the terminal device, the identifier of the cell corresponding to the signal coverage at the position of the terminal device, and measures the quality of the signal of the cell corresponding to the identifier at the position of the terminal device, compares the measured signal quality with the second predetermined threshold, and determines the identifier of the cell of which the signal quality is greater than the second predetermined threshold.

Thirdly, when it is determined that the cell corresponding to identifier of the at least one cell is not adjacent to the cell corresponding to the identifier of the cell accessed by the terminal device, it is determined that the cell accessed by the terminal device is subjected to the lakeside effect.

To be specific, it is determined whether the cell of which the signal quality is greater than the second predetermined threshold is adjacent to the cell accessed by the terminal device. When it is determined that the cell corresponding to identifier of the at least one cell is not adjacent to the cell corresponding to the identifier of the cell accessed by the terminal device, it is determined that the cell accessed by the terminal device is subjected to the lakeside effect.

It should be noted that, the second threshold may be determined based on the signal coverage quality at a certain position, or based on experimental data, which is not limited herein.

At last, the network side sends the cell resident risk identifier to the cell subjected to the lakeside effect.

It should be noted that, when the network side determines that the serving cell has a risk to be subjected to the lakeside effect, the network side may send the identifier of the serving cell to an adjacent cell, so as to notify the adjacent cell that the serving cell has a risk to be subjected to the lakeside effect.

In another embodiment of the present disclosure, the method further includes: receiving a cell resident risk identifier sent by an adjacent serving cell, and adding the cell resident risk identifier sent by the adjacent serving cell and identifier of the adjacent serving cell into the system information.

Step 202: receiving, when a terminal device residing at the serving cell determines that the terminal device is not subjected to a lakeside effect, access information of the terminal device, and permitting the terminal device to access the serving cell.

### Embodiment III

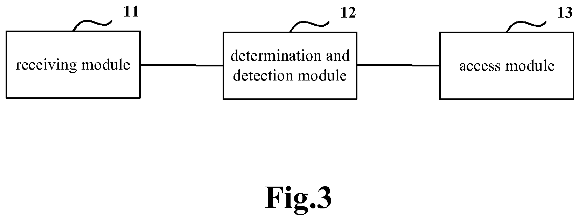

Fig.3 is a schematic view of a terminal device for accessing a cell in embodiment III of the present disclosure, the terminal device includes: a receiving module 11, a determination and detection module 12 and an access module 13.

The receiving module 11 is configured to receive system information of a serving cell where a terminal device resides, wherein the system information includes a cell resident risk identifier and measurement information;

The determination and detection module 12 is configured to determine, based on the cell resident risk identifier, that the serving cell has a risk to be subjected to a lakeside effect, and detect signal quality of the serving cell based on the measurement information;

The access module 13 is configured to determine whether the terminal device is subjected to the lakeside effect based on the detected signal quality, and access the serving cell when it is determined that terminal device is not subjected to the lakeside effect.

Furthermore, the access module 13 is further configured to initiate a serving cell reselection operation when it is determined that the terminal device is subjected to the lakeside effect, and set the serving cell where the terminal device resides currently as a serving cell which the terminal device is forbidden to access.

The system information further includes a predetermined signal quality threshold of the serving cell.

The access module 13 is further configured to compare the detected signal quality with the received predetermined signal quality threshold of the serving cell, and determine whether the terminal device is subjected to the lakeside effect based on a result of the comparison.

The access module 13 is further configured to determine that the terminal device is not subjected to the lakeside effect when the terminal device determines that the detected signal quality is not greater than the received predetermined signal quality threshold of the serving cell, or determine that the terminal device is subjected to the lakeside effect when the terminal device determines that the detected signal quality information is greater than the received predetermined signal quality threshold of the serving cell.

A process of acquiring the cell resident risk identifier includes: sending cell accessing failure event information to a network side, wherein the cell accessing failure event information includes an identifier of a cell accessed by the terminal device and a position of the terminal device; determining, by the network side, a position of the cell accessed by the terminal device, based on the received identifier of the cell accessed by the terminal device; determining that the cell accessed by the terminal device is subjected to the lakeside effect when it is determined that a distance between the position of the cell accessed by the terminal device and the position of the terminal device is greater than a first predetermined threshold; and sending the cell resident risk identifier to the cell subjected to the lakeside effect.
a process of acquiring the cell resident risk identifier includes: sending cell accessing failure event information to a network side, wherein the cell accessing failure event information comprises an identifier of a cell accessed by the terminal device and position of the terminal device; determining, by the network side, based on the position of the terminal device, an identifier of at least one cell of which the signal quality is greater than a second predetermined threshold at the position of the terminal device; determining that the cell accessed by the terminal device is subjected to the lakeside effect when it is determined that the at least one cell is not adjacent to the cell corresponding to the identifier of the cell accessed by the terminal device; and sending the cell resident risk identifier to the cell subjected to the lakeside effect.

It should be noted that, the function of the terminal device in embodiment III of the present disclosure may be implemented by hardware and software, which is not limited herein.

### Embodiment IV

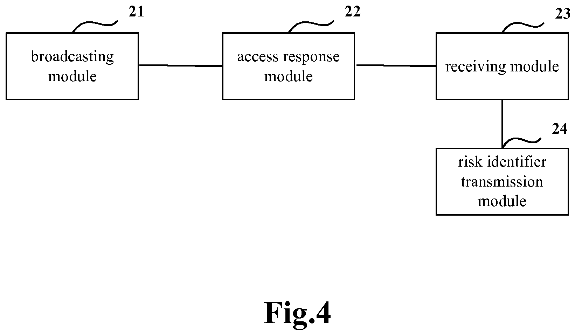

Fig.4 is a schematic view of a serving cell to be accessed in embodiment IV of the present disclosure. The serving cell includes: a broadcasting module 21 and an access response module 22.

The broadcasting module 21 is configured to broadcast system information, wherein the system information comprises a cell resident risk identifier and measurement information.

The access response module 22 is configured to receive, when a terminal device residing at the serving cell determines that the terminal device is not subjected to a lakeside effect, access information of the terminal device, and permit the terminal device to access the serving cell.

The serving cell further includes a receiving module 23 configured to receive a cell resident risk identifier sent from a network side prior to broadcasting system information.

The serving cell further includes a risk identifier transmission module 24 configured to receive a cell resident risk identifier sent by an adjacent serving cell and add the cell resident risk identifier sent by the adjacent serving cell and an identifier of the adjacent serving cell into the system information.

It should be noted that, the function of the serving cell in embodiment IV of the present disclosure may be implemented by hardware and software, which is not limited herein.

### Exemplary embodiment V

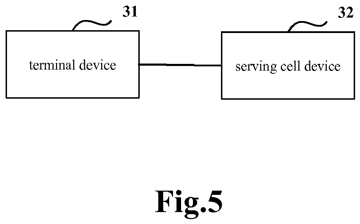

Fig.5 is a schematic view of a cell accessing system in embodiment V of the present disclosure. The system includes a terminal device 31 and a serving cell device 32.

The terminal device is configured to receive system information sent by a serving cell where the terminal device resides, wherein the system information includes a cell resident risk identifier and measurement information; determine, based on the cell resident risk identifier, that the serving cell has a risk to be subjected to a lakeside effect; detect signal quality of the serving cell based on the measurement information; determine whether the terminal device is subjected to the lakeside effect based on the detected signal quality; and access the serving cell when it is determined that terminal device is not subjected to the lakeside effect.

The serving cell device 32 is configured to broadcast system information including a cell resident risk identifier and measurement information; receive, when a terminal device residing at the serving cell determines that the terminal device is not subjected to a lakeside effect, access information of the terminal device, and permit the terminal device to access the serving cell.

It should be noted that, the terminal device 31 in this embodiment of the present disclose has the function identical to the terminal device in embodiment III of the present disclosure, and the serving cell device 32 in this embodiment of the present disclosure has the function identical to the serving cell in embodiment IV of the present disclosure, and the detailed description thereof is omitted herein.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, CD-ROM and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

Although the preferred embodiments are described above, a person skilled in the art may make modifications and alterations to these embodiments in accordance with the basic concept of the present disclosure.

## Claims

1. A method for accessing a cell, comprising:
receiving (101), by a terminal device (31), system information sent by a serving cell (32) where the terminal device (31) resides, the system information comprising a cell resident risk identifier and measurement information;
determining (102), by the terminal device (31), based on the reception of the cell resident risk identifier that the serving cell (32) has a risk to be subjected to a lakeside effect, and detecting signal quality of the serving cell (32) based on the measurement information, wherein the lakeside effect relates to an inconsistency between an uplink signal and a downlink signal of the serving cell; and
determining (103), by the terminal device (31), whether the terminal device (31) is currently subjected to the lakeside effect based on the detected signal quality, and
accessing (104) the serving cell (32) when it is determined that the terminal device (31) is not subjected to the lakeside effect,
wherein the system information further comprises a predetermined signal quality threshold of the serving cell (32) ;
the step of determining whether the terminal device (31) is subjected to the lakeside effect based on the detected signal quality further comprises:
determining, by the terminal device (31), that the terminal device (31) is not subjected to the lakeside effect, when the terminal device (31) determines that the detected signal quality is not greater than the received predetermined signal quality threshold of the serving cell (32); and
determining, by the terminal device (31), that the terminal device (31) is subjected to the lakeside effect, when the terminal device (31) determines that the detected signal quality is greater than the received predetermined signal quality threshold of the serving cell (32),
initiating (105), by the terminal device (31), a serving cell reselection operation, and
setting the serving cell (32) where the terminal device (31) resides as a serving cell (32) which the terminal device (31) is forbidden to access, where in the method further comprises:
after the terminal device (31) resides at the serving cell (32) and a request of accessing the serving cell is failed,
sending, by the terminal device (31), cell accessing failure event information to a network side, the cell accessing failure event information comprising an identifier of a cell accessed by the terminal device (31) and a position of the terminal device (31),
determining, by the network side, that the cell accessed by the terminal device (31) is subjected to the lakeside effect if a distance between the position of the cell accessed by the terminal device (31) based on the received identifier of said cell and the position of the terminal device (31) is greater than a first predetermined threshold, and
sending, by the network side, the cell resident risk identifier to the cell subjected to the lakeside effect.

2. A method for accessing a cell, comprising:
receiving (101), by a terminal device (31), system information sent by a serving cell (32) where the terminal device (31) resides, the system information comprising a cell resident risk identifier and measurement information;
determining (102), by the terminal device (31), based on the reception of the cell resident risk identifier that the serving cell (32) has a risk to be subjected to a lakeside effect, and detecting signal quality of the serving cell (32) based on the measurement information, wherein the lakeside effect relates to an inconsistency between an uplink signal and a downlink signal of the serving cell; and
determining (103), by the terminal device (31), whether the terminal device (31) is currently subjected to the lakeside effect based on the detected signal quality, and
accessing (104) the serving cell (32) when it is determined that the terminal device (31) is not subjected to the lakeside effect,
wherein the system information further comprises a predetermined signal quality threshold of the serving cell (32) ;
the step of determining whether the terminal device (31) is subjected to the lakeside effect based on the detected signal quality comprises:
determining, by the terminal device (31), that the terminal device (31) is not subjected to the lakeside effect, when the terminal device (31) determines that the detected signal quality is not greater than the received predetermined signal quality threshold of the serving cell (32); and
determining, by the terminal device (31), that the terminal device (31) is subjected to the lakeside effect, when the terminal device (31) determines that the detected signal quality is greater than the received predetermined signal quality threshold of the serving cell (32),
initiating (105), by the terminal device (31), a serving cell reselection operation, and
setting the serving cell (32) where the terminal device (31) resides as a serving cell (32) which the terminal device (31) is forbidden to access, where in the method further comprises:
after the terminal device (31) resides at the serving cell (32) and a request of accessing the serving cell is failed,
sending, by the terminal device (31), cell accessing failure event information to a network side, the cell accessing failure event information comprising an identifier of a cell accessed by the terminal device (31) and a position of the terminal device (31),
determining, by the network side, that the cell accessed by the terminal device (31) is subjected to the lakeside effect if at least one cell with signal coverage at the position of the terminal device having a signal quality greater than a second predetermined threshold is not adjacent to the cell accessed by the terminal device (31); and
sending, by the network side, the cell resident risk identifier to the cell subjected to the lakeside effect.

## Patentansprüche

1. Verfahren zum Zugriff auf eine Zelle, aufweisend:
Empfangen (101) durch eine Endvorrichtung (31) von Systeminformationen, die von einer Versorgungszelle (32), in der sich die Endvorrichtung (31) befindet, gesendet werden, wobei die Systeminformationen eine zellresidente Risikokennung und Messinformationen aufweisen;
Bestimmen (102) durch die Endvorrichtung (31), basierend auf dem Empfang der zellresidenten Risikokennung, dass die Versorgungszelle (32) ein Risiko besitzt, einem Lakeside-Effekt ausgesetzt zu werden, und Erfassen der Signalqualität der Versorgungszelle (32) basierend auf den Messinformationen, wobei sich der Lakeside-Effekt auf eine Inkonsistenz zwischen einem Uplink- und einem Downlinksignal der Versorgungszelle bezieht; und
Bestimmen (103) durch die Endvorrichtung (31), ob basierend auf der erfassten Signalqualität die Endvorrichtung (31) derzeit dem Lakeside-Effekt ausgesetzt ist, und
Zugreifen (104) auf die Versorgungszelle (32), wenn bestimmt wird, dass die Endvorrichtung (31) nicht dem Lakeside-Effekt ausgesetzt ist,
wobei die Systeminformation ferner einen vorgegebenen Signalqualitätsschwellenwert der Versorgungszelle (32) aufweist;
wobei der Schritt des Bestimmens, ob die Endvorrichtung (31) basierend auf der erfassten Signalqualität dem Lakeside-Effekt ausgesetzt ist, ferner aufweist:
Bestimmen durch die Endvorrichtung (31), dass die Endvorrichtung (31) nicht dem Lakeside-Effekt ausgesetzt ist, wenn die Endvorrichtung (31) bestimmt, dass die erfasste Signalqualität nicht größer als der empfangene vorgegebene Signalqualitätsschwellenwert der Versorgungszelle (32) ist; und
Bestimmen durch die Endvorrichtung (31), dass die Endvorrichtung (31) dem Lakeside-Effekt ausgesetzt ist, wenn die Endvorrichtung (31) bestimmt, dass die erfasste Signalqualität größer als der empfangene vorgegebene Signalqualitätsschwellenwert der Versorgungszelle (32) ist,
Einleiten (105) eines Versorgungszellen-Neuauswahlvorgangs durch die Endvorrichtung (31), und
Einstellen der Versorgungszelle (32), in der sich die Endvorrichtung (31) als eine Versorgungszelle (32) befindet, auf die die Endvorrichtung (31) keinen Zugriff hat,
wobei das Verfahren ferner aufweist:
nachdem sich die Endvorrichtung (31) an der Versorgungszelle (32) befindet und eine Anforderung zum Zugriff auf die Versorgungszelle fehlgeschlagen ist,
Senden von Zellenzugriffsausfallereignisinformationen durch die Endvorrichtung (31) an eine Netzwerkseite, wobei die Zellenzugriffsausfallereignisinformationen eine Kennung einer Zelle, auf die von der Endvorrichtung (31) zugegriffen wird, und eine Position der Endvorrichtung (31) umfassen,
Bestimmen, durch die Netzwerkseite, dass die Zelle, auf die die Endvorrichtung (31) zugreift, dem Lakeside-Effekt ausgesetzt ist, wenn ein Abstand zwischen der Position der Zelle, auf die die Endvorrichtung (31) basierend auf der empfangenen Kennung der Zelle zugreift, und der Position der Endvorrichtung (31) größer als ein erster vorgegebener Schwellenwert ist, und
Senden durch die Netzwerkseite der zellresidenten Risikokennung an die Zelle, die dem Lakeside-Effekt ausgesetzt ist.

2. Verfahren zum Zugriff auf eine Zelle, aufweisend:
Empfangen (101) durch eine Endvorrichtung (31) von Systeminformationen, die von einer Versorgungszelle (32), in der sich die Endvorrichtung (31) befindet, gesendet werden, wobei die Systeminformationen eine zellresidente Risikokennung und Messinformationen umfassen;
Bestimmen (102) durch die Endvorrichtung (31), basierend auf dem Empfang der zellresidenten Risikokennung, dass die Versorgungszelle (32) ein Risiko aufweist, einem Lakeside-Effekt ausgesetzt zu werden, und Erfassen der Signalqualität der Versorgungszelle (32) basierend auf den Messinformationen, wobei sich der Lakeside-Effekt auf eine Inkonsistenz zwischen einem Uplink- und einem Downlinksignal der Versorgungszelle bezieht; und
Bestimmen (103) durch die Endvorrichtung (31), ob basierend auf der erfassten Signalqualität die Endvorrichtung (31) derzeit dem Lakeside-Effekt ausgesetzt ist, und
Zugreifen (104) auf die Versorgungszelle (32), wenn bestimmt wird, dass die Endvorrichtung (31) nicht dem Lakeside-Effekt ausgesetzt ist,
wobei die Systeminformation ferner einen vorgegebenen Signalqualitätsschwellenwert der Versorgungszelle (32) aufweist;
wobei der Schritt des Bestimmens, ob die Endvorrichtung (31) basierend auf der erfassten Signalqualität dem Lakeside-Effekt ausgesetzt ist, aufweist:
Bestimmen durch die Endvorrichtung (31), dass die Endvorrichtung (31) nicht dem Lakeside-Effekt ausgesetzt ist, wenn die Endvorrichtung (31) bestimmt, dass die erfasste Signalqualität nicht größer als der empfangene vorgegebene Signalqualitätsschwellenwert der Versorgungszelle (32) ist; und
Bestimmen durch die Endvorrichtung (31), dass die Endvorrichtung (31) dem Lakeside-Effekt ausgesetzt ist, wenn die Endvorrichtung (31) bestimmt, dass die erfasste Signalqualität größer als der empfangene vorbestimmte Signalqualitätsschwellenwert der Versorgungszelle (32) ist,
Einleiten (105) eines Versorgungszellen-Neuauswahlvorgangs durch die Endvorrichtung (31), und
Einstellen der Versorgungszelle (32), in der sich die Endvorrichtung (31) als Versorgungszelle (32) befindet, auf die die Endvorrichtung (31) keinen Zugriff hat,
wobei das Verfahren ferner aufweist:
nachdem sich die Endvorrichtung (31) an der Versorgungszelle (32) befindet und eine Anforderung des Zugriffs auf die Versorgungszelle fehlgeschlagen ist,
Senden von Zellenzugriffsausfallereignisinformationen durch die Endvorrichtung (31) an eine Netzwerkseite, wobei die Zellenzugriffsausfallereignisinformationen eine Kennung einer Zelle, auf die von der Endvorrichtung (31) zugegriffen wird, und eine Position der Endvorrichtung (31) umfassen,
Bestimmen durch die Netzwerkseite, dass die Zelle, auf die die Endvorrichtung (31) zugreift, dem Lakeside-Effekt ausgesetzt ist, wenn mindestens eine Zelle mit Signalabdeckung an der Position der Endvorrichtung mit einer Signalqualität, die größer als ein zweiter vorgegebener Schwellenwert ist, nicht an die Zelle angrenzt, auf die die Endvorrichtung (31) zugreift; und
Senden durch die Netzwerkseite der zellresidenten Risikokennung an die Zelle, die dem Lakeside-Effekt ausgesetzt ist.

## Revendications

1. Méthode pour accéder à une cellule, comprenant les étapes consistant à :
recevoir (101), par un dispositif de terminal (31), des informations de système envoyées par une cellule de desserte (32) où réside le dispositif de terminal (31), les informations de système comprenant un identifiant de risque de résident de cellule et des informations de mesure ;
déterminer (102), par le dispositif de terminal (31), sur la base de la réception de l'identifiant de risque de résident de cellule que la cellule de desserte (32) risque d'être soumise à un effet de lac, et détecter une qualité de signal de la cellule de desserte (32) sur la base des informations de mesure, l'effet de lac concernant une incohérence entre un signal de liaison montante et un signal de liaison descendante de la cellule de desserte ; et
déterminer (103), à l'aide du dispositif de terminal (31), si le dispositif de terminal (31) est actuellement soumis à l'effet de lac en fonction de la qualité de signal détectée, et
accéder (104) à la cellule de desserte (32) lorsqu'il est déterminé que le dispositif de terminal (31) n'est pas soumis à l'effet de lac,
dans lequel les informations de système comprennent en outre un seuil de qualité de signal prédéterminé de la cellule de desserte (32) ;
l'étape consistant à déterminer si le dispositif de terminal (31) est soumis à l'effet de lac en fonction de la qualité de signal détectée comprend en outre les étapes consistant à :
déterminer, par le dispositif de terminal (31), que le dispositif de terminal (31) n'est pas soumis à l'effet de lac, lorsque le dispositif de terminal (31) détermine que la qualité de signal détectée n'est pas supérieure au seuil de qualité de signal prédéterminé reçu de la cellule de desserte (32) ; et
déterminer, par le dispositif de terminal (31), que le dispositif de terminal (31) est soumis à l'effet de lac, lorsque le dispositif de terminal (31) détermine que la qualité de signal détectée est supérieure au seuil de qualité de signal prédéterminé reçu de la cellule de desserte (32),
initier (105), par le dispositif de terminal (31), une opération de resélection de cellule de desserte, et
régler la cellule de desserte (32) où le dispositif de terminal (31) réside en tant que cellule de desserte (32) à laquelle le dispositif de terminal (31) n'a pas le droit d'accéder,
dans lequel la méthode comprend en outre :
une fois que le dispositif de terminal (31) réside dans la cellule de desserte (32) et qu'une demande d'accès à la cellule de desserte a échoué,
envoyer, par le dispositif de terminal (31), des informations d'événement de défaillance d'accès à une cellule à un côté de réseau, les informations d'événement de défaillance d'accès à une cellule comprenant un identifiant d'une cellule à laquelle le dispositif de terminal (31) accède et une position du dispositif de terminal (31),
déterminer, par le côté de réseau, que la cellule à laquelle accède le dispositif de terminal (31) est soumise à l'effet de lac, si une distance entre la position de la cellule à laquelle accède le dispositif de terminal (31) est basée sur l'identifiant reçu de ladite cellule et la position du dispositif de terminal (31) est supérieure à un premier seuil prédéterminé, et
envoyer, par le côté de réseau, l'identifiant de risque de résident de cellule vers la cellule soumise à l'effet de lac.

2. Méthode pour accéder à une cellule, comprenant les étapes consistant à :
recevoir (101), par un dispositif de terminal (31), des informations de système envoyées par une cellule de desserte (32) où réside le dispositif de terminal (31), les informations de système comprenant un identifiant de risque de résident de cellule et des informations de mesure ;
déterminer (102), par le dispositif de terminal (31), sur la base de la réception de l'identifiant de risque de résident de cellule, que la cellule de desserte (32) risque d'être soumise à un effet de lac, et détecter la qualité de signal de la cellule de desserte (32) sur la base des informations de mesure, l'effet de lac concernant une incohérence entre un signal de liaison montante et un signal de liaison descendante de la cellule de desserte ; et
déterminer (103), par le dispositif de terminal (31), si le dispositif de terminal (31) est actuellement soumis à l'effet de lac sur la base de la qualité de signal détectée, et
accéder (104) à la cellule de desserte (32) quand il est déterminé que le dispositif de terminal (31) n'est pas soumis à l'effet de lac,
dans laquelle les informations de système comprennent en outre un seuil de qualité de signal prédéterminé de la cellule de desserte (32) ;
l'étape consistant à déterminer si le dispositif de terminal (31) est soumis à l'effet de lac sur la base de la qualité de signal détectée comprend les étapes consistant à :
déterminer, par le dispositif de terminal (31), que le dispositif de terminal (31) n'est pas soumis à l'effet de lac, lorsque le dispositif de terminal (31) détermine que la qualité de signal détectée n'est pas supérieure au seuil de qualité de signal prédéterminé reçu de la cellule de desserte (32) ; et
déterminer, par le dispositif de terminal (31), que le dispositif de terminal (31) est soumis à l'effet de lac, lorsque le dispositif de terminal (31) détermine que la qualité de signal détectée est supérieure au seuil de qualité de signal prédéterminé reçu de la cellule de desserte (32)
initier (105), par le dispositif de terminal (31), une opération de resélection de cellule de desserte, et
régler la cellule de desserte (32) où le dispositif de terminal (31) réside en tant que cellule de desserte (32) à laquelle le dispositif de terminal (31) n'a pas le droit d'accéder,
dans laquelle la méthode comprend en outre les étapes consistant à :
une fois que le dispositif de terminal (31) réside dans la cellule de desserte (32) et qu'une demande d'accès à la cellule de desserte a échoué,
envoyer, par le dispositif de terminal (31), des informations d'événement de défaillance d'accès à une cellule à un côté de réseau, les informations d'événement de défaillance d'accès à une cellule comprenant un identifiant d'une cellule à laquelle le dispositif de terminal (31) accède et une position du dispositif de terminal (31),
déterminer, par le côté de réseau, que la cellule à laquelle accède le dispositif de terminal (31) est soumise à l'effet de lac si au moins une cellule avec une couverture de signal à la position du dispositif de terminal ayant une qualité de signal supérieure à un second seuil prédéterminé n'est pas adjacente à la cellule à laquelle accède le dispositif de terminal (31) ; et
envoyer, par le côté de réseau, l'identifiant de risque de résident de cellule vers la cellule soumise à l'effet de lac.
